# EUROPEAN PATENT APPLICATION

(11) **EP 4 129 775 A1**
(43) Date of publication of application: **08.02.2023**
(21) Application number: 22187893.7
(22) Date of filing: 29.07.2022
(51) Int. Cl.: B60S 1/48, B60S 1/56

(54) **AUTONOMOUS VEHICLE SENSOR CLEANING**

(30) Priority: 06.08.2021 US 202163230513 P
(71) Applicant: Robert Bosch GmbH, 70442 Stuttgart (DE)
(72) Inventor: El-Gammal, Mohamed, Windsor, Ontario, N9B 3W4 (CA); Wagner, Vivien, West Bloomfield, MI, 48322 (US); Zybell, Juergen, Novi, MI, 48374 (US)

(57) **Abstract**

A system and method for cleaning a sensor of a vehicle. The system includes a jet configured to eject a fluid at an alternating pulse at the sensor. The system also includes an electronic processor configured to detect that the sensor is dirty and operate the jet such that the fluid is ejected at the sensor at a predetermined pulse speed.

## Description

### CROSS-REFERENCE TO RELATED APPLICATIONS

The present application is related to and claims benefit under 35 U.S.C. §119(c) from U.S. Provisional Patent Application Serial Number 63/230,513, filed August 6, 2021, entitled "Autonomous Vehicle Sensor Cleaning," the entire contents of which being incorporated herein by reference.

### FIELD

Embodiments presented herein relate to sensor cleaning systems for vehicles.

### BACKGROUND

Modern vehicles include systems that provide autonomous or partially-autonomous capabilities. For example, advanced driver assistance systems (ADASs) include lane keeping assistance, adaptive cruise-control, collision mitigation, self-parking, and similar systems. ADASs often use sensor inputs and driver inputs to determine when to adjust steering, acceleration, braking, and other vehicle operations and movements. For example, collision mitigation systems use sensor inputs to detect objects and driver inputs to predict a likely vehicle trajectory in order to detect and mitigate collisions. As another example, lane keeping systems process sensor information to automatically determine a trajectory, and control at least a vehicle's steering system to cause the vehicle to follow the trajectory.

### BRIEF DESCRIPTION OF THE DRAWINGS

The accompanying figures, where like reference numerals refer to identical or functionally similar elements throughout the separate views, together with the detailed description below, are incorporated in and form part of the specification, and serve to further illustrate embodiments of concepts that include the claimed invention, and explain various principles and advantages of those embodiments.
FIG. 1 is a block diagram of a vehicle, according to some embodiments.
FIG. 2 is a block diagram of an electronic controller of the system of FIG. 1, according to some embodiments.
FIG. 3 is a flowchart illustrating a method of cleaning a sensor of the vehicle of FIG. 1, according to some embodiments.
FIG. 4 is a block diagram of the sensor cleaning system of the vehicle of FIG. 1 according to some embodiments.
FIG. 5 is a flowchart illustrating particular cleaning patterns based on a soil type of a sensor of the vehicle of FIG. 1 according to some embodiments.

Skilled artisans will appreciate that elements in the figures are illustrated for simplicity and clarity and have not necessarily been drawn to scale. For example, the dimensions of some of the elements in the figures may be exaggerated relative to other elements to help to improve understanding of embodiments illustrated.

The apparatus and method components have been represented where appropriate by conventional symbols in the drawings, showing only those specific details that are pertinent to understanding the embodiments so as not to obscure the disclosure with details that will be readily apparent to those of ordinary skill in the art having the benefit of the description herein.

### SUMMARY

As noted, autonomous and other driving systems are being developed to perform various driver assistance functions to provide partially or fully automated control of a vehicle with minimal or no driver input. To perform these functions, data from various sensors of the vehicle is necessary. However, depending on its location on a vehicle, a sensor may be exposed to water, snow, ice, mud, sand, dirt, debris, bugs, tree sap, grease, and other items that may cover, coat, or collect on the sensor. A sensor covered, coated, or otherwise affected these items may be referred to as a "dirty" sensor. A dirty may provide inaccurate readings or data. In some cases, a dirty sensor may not be able to provide any usable data. It is, therefore, necessary to not only clean the sensor but also to detect, as soon as possible, when the sensor needs to be cleaned. Furthermore, minimal usage of washing fluid is crucial for completing trips with minimal disruptions due to washing fluid tank refill.

Accordingly, systems and methods are provided herein for, among other things, sensor cleaning for autonomous vehicle systems.

One embodiment provides a sensor cleaning system for cleaning a sensor of a vehicle. The system includes a jet configured to eject or spray a fluid at an alternating pulse or stream of fluid at the sensor. The system also includes an electronic processor configured to detect that the sensor is dirty and operate the jet such that the fluid is ejected at the sensor at a predetermined pulse speed.

Another embodiment provides a method for cleaning a sensor of a vehicle. The method includes detecting that the sensor is dirty and operating a jet configured to eject a fluid at an alternating pulse at the sensor such that the fluid is ejected at the sensor at a predetermined pulse speed.

### DETAILED DESCRIPTION

Before any embodiments are explained in detail, it is to be understood that the examples presented herein are not limited in their application to the details of construction and the arrangement of components set forth in the following description or illustrated in the drawings. Embodiments may be practiced or carried out in various ways. For example, while the systems and methods are described herein in terms of automotive systems, such systems and methods may be applied to other types of vehicle systems.

Also, it is to be understood that the phraseology and terminology used herein is for the purpose of description and should not be regarded as limiting. The terms "mounted," "connected" and "coupled" are used broadly and encompass both direct and indirect mounting, connecting and coupling. Further, "connected" and "coupled" are not restricted to physical or mechanical connections or couplings, and can include electrical connections or couplings, whether direct or indirect. Also, electronic communications and notifications may be performed using any known means including wired connections, wireless connections, etc.

It should also be noted that a plurality of hardware and software-based devices, as well as a plurality of different structural components may be used to implement the embodiments presented herein. Some embodiments may include hardware, software, and electronic components or modules that, for purposes of discussion, may be illustrated and described as if the majority of the components were implemented solely in hardware. However, one of ordinary skill in the art, and based on a reading of this detailed description, would recognize that, in at least one embodiment, the electronic based aspects may be implemented in software (for example, stored on non-transitory computer-readable medium) executable by one or more electronic processors. Therefore, it should be noted that a plurality of hardware and software-based devices, as well as a plurality of different structural components may be utilized to implement the embodiments presented. For example, "control units" and "controllers" described in the specification can include one or more electronic processors, one or more memory modules including non-transitory computer-readable medium, one or more input/output interfaces, and various connections (for example, a system bus) connecting the components.

For ease of description, some of the example systems presented herein are illustrated with a single exemplar of each of its component parts. Some examples may not describe or illustrate all components of the systems. Other embodiments may include more or fewer of each of the illustrated components, may combine some components, or may include additional or alternative components.

As noted, it is important that sensors, especially those of an autonomous vehicle, remain clean. Detection and quick, effective cleaning of the sensors is thus desirable. Additionally, minimal washing fluid usage may also be desired reduce the amount of washing fluid used and the need to refill washing fluid reservoirs.

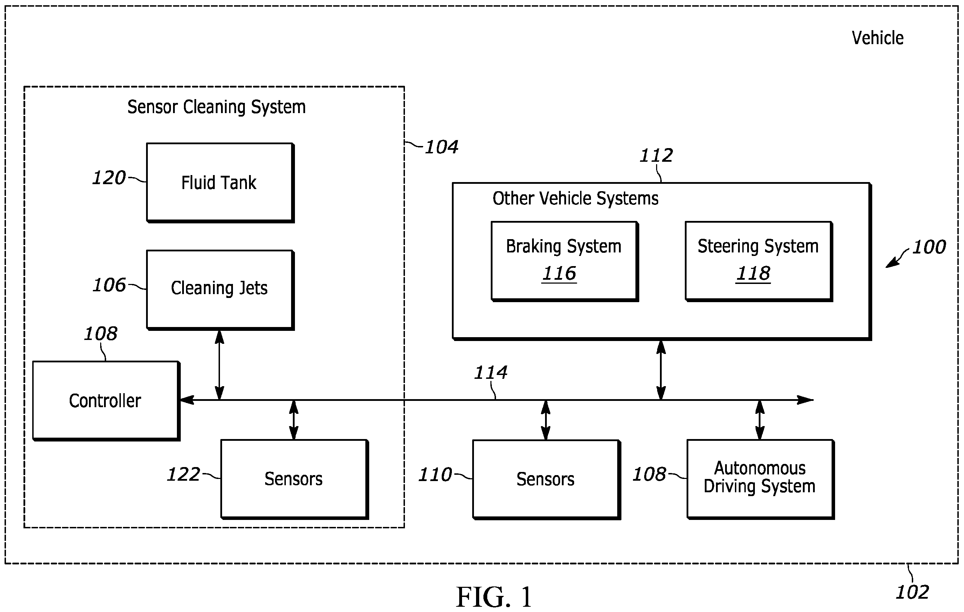

FIG. 1 is a block diagram of one exemplary embodiment of an autonomous vehicle control system 100. The autonomous vehicle control system 100 may be mounted on, or integrated into, a vehicle 102 and autonomously drives the vehicle. It should be noted that, in the description that follows, the terms "autonomous vehicle" and "automated vehicle" should not be considered limiting. The terms are used in a general way to refer to an autonomous or automated driving vehicle, which possesses varying degrees of automation (that is, the vehicle is configured to drive itself with limited, or in some cases no, input from a driver). The systems and methods described herein may be used with any vehicle capable of operating partially or fully autonomously, being controlled manually by a driver, or some combination of both.

In the example illustrated, the system 100 includes a sensor cleaning system 104, sensors 106, an autonomous driving system 108, and other vehicle systems 110. The components of the system 100, along with other various modules and components are electrically coupled to each other by or through one or more control or data buses (for example, the bus 112), which enable communication therebetween. The use of control and data buses for the interconnection between, and communication among, the various modules and components would be known to a person skilled in the art in view of the invention described herein. In some embodiments, the bus 116 is a Controller Area Network (CAN^{™}) bus. In some embodiments, the bus 116 is an automotive Ethernet^{™}, a FlexRay^{™} communications bus, or another suitable wired bus. In alternative embodiments, some or all of the components of the system 100 may be communicatively coupled using suitable wireless modalities (for example, Bluetooth^{™} or near field communication).

For ease of description, the system 100 illustrated in FIG. 1 includes one of each of the foregoing components. Alternative embodiments may include one or more of each component or may exclude or combine some components. The autonomous driving system 110 operates one or more of the other vehicle systems 112 (for example, a braking system 116 and/or steering system 118) to control the vehicle.

The autonomous driving system 108 receives measurements or readings (sometimes referred to as sensor telemetry) from the sensors 110 and determines vehicle path data (for example, vehicle trajectories). The autonomous driving system 108 transmits vehicle path data to, among other things, the vehicle steering system to control movement of the vehicle (for example, by generating braking signals, acceleration signals, steering signals). The autonomous driving system 108 may also uses the vehicle path data and sensor telemetry received from the sensors 110 to detect and mitigate imminent collisions between the vehicle 102 and objects in the environment surround the vehicle 102. For example, the autonomous driving system 108 may issue braking commands to the braking system 116 to slow or stop the vehicle.

The sensors 110 determine one or more attributes of the vehicle and its surrounding environment and communicate information regarding those attributes to the other components of the system 100 using, for example, electrical signals. The vehicle attributes include, for example, the position of the vehicle or portions or components of the vehicle, the movement of the vehicle or portions or components of the vehicle, the forces acting on the vehicle or portions or components of the vehicle, the proximity of the vehicle to other vehicles or objects (stationary or moving), yaw rate, sideslip angle, steering wheel angle, superposition angle, vehicle speed, longitudinal acceleration, and lateral acceleration, and the like. The sensors 110 may include, for example, vehicle control sensors (for example, sensors that detect accelerator pedal position, brake pedal position, and steering wheel position [steering angle]), wheel speed sensors, vehicle speed sensors, yaw sensors, force sensors, odometry sensors, and vehicle proximity sensors (for example, camera, radar, LIDAR, and ultrasonic). In some embodiments, the sensors 110 include one or more cameras configured to capture one or more images of the environment surrounding the vehicle 102 according to their respective fields of view. The cameras may include multiple types of imaging devices/sensors, each of which may be located at different positions on the interior or exterior of the vehicle 102. In some embodiments, the system 100 includes, in addition to the sensors 110, a GNSS (global navigation satellite system) system that determines geo-spatial positioning (i.e., latitude, longitude, altitude, and speed) for the vehicle based on received satellite radiofrequency signals. The autonomous driving system 108 may use this information in conjunction with information received from the sensors 110 when controlling vehicle 102.

The autonomous driving system 108 receives and interprets the signals from the sensors 110 to determine values for one or more vehicle attributes, including, for example, vehicle speed, steering angle, vehicle position, pitch, yaw, and roll. The autonomous driving system 104 and the collision mitigation system 106 also receive and interpret the signals from the sensors to determine attributes of the environment surround the vehicle 102 (for example, road markings, traffic signals, traffic signs, and the presence, location, trajectories of objects potentially in the environment surrounding the vehicle 102). In some embodiments, the autonomous driving system 104, the collision mitigation system 106, or both, include object detection software, which uses machine learning techniques to detect (for example, from images received from a camera), objects that may impact the movement of the vehicle 102. For example, the object detection software may include a convolutional neural network that has been trained to recognize vehicles, people, animals, a combination of the foregoing, and the like.

The braking system 116 is a braking system that utilizes a frictional braking force to inhibit the motion of one or more of the wheels of the vehicle 102 in order to slow and/or stop the vehicle 102. For example, some or all of the wheels are fitted with brake pads which apply a frictional braking force that inhibits the motion of rotors connected to the wheels. In some embodiments, the braking system 110 is a conventional hydraulic braking system. The braking system 110 may include a brake booster configured to increase the force a brake pad exerts on the wheels of the vehicle 102. In some embodiments, the braking system 110 includes a regenerative braking system. The regenerative braking system, during a braking maneuver, causes an electric motor to act as a generator and stores or redistributes the power generated by the motor. The act of generating power creates a braking torque on the motor that is transmitted to one or more of the wheels that the motor is coupled to in order to slow and/or stabilize the vehicle 102.

The steering system 118 is configured to direct the vehicle 102 by moving steering components connected to a front axle of the vehicle 102 based on a steering command (for example, a movement of a steering wheel or a command from the autonomous driving system 108). The steering system 108 may also include a steering wheel, servo motors, actuators, and the like.

The other vehicle systems 112 include controllers, sensors, actuators, and the like for controlling aspects of the operation of the vehicle 102 (for example, steering, acceleration, braking, shifting gears, and the like). The other vehicle systems 112 are configured to send and receive data relating to the operation of the vehicle 102 to and from the autonomous driving system 108.

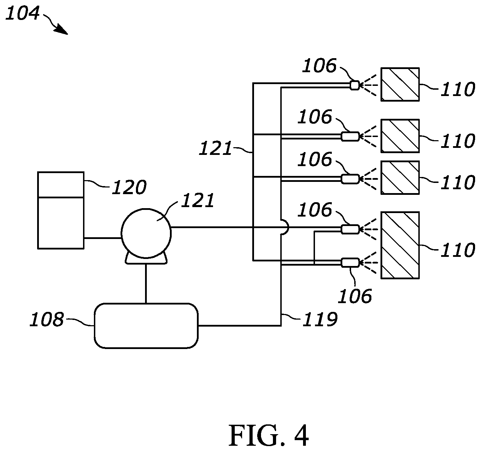

The sensor cleaning system 104 includes one or more cleaning jets 106 and an electronic controller 108. The electronic controller 108, as explained in more detail below, is configured to operate each of the cleaning jets 106 to clean one or more of the sensors 110. Each one of the cleaning jets 106 receives fluid from a fluid tank 120 via one or more feed lines (feed lines 119 of FIG. 4). As illustrated in more detail in FIG. 4, each cleaning jets 106 is positioned throughout the vehicle 102 such that it ejects fluid at at least one of the sensors 110. In some embodiments, one or more of the sensors 110 are cleaned with fluid from more than one cleaning jet 106.

The fluid tank 120 may include one or more heating elements and/or cooling elements (not shown). One or more heating and/or cooling elements may alternatively or additionally be disposed along the feed lines 119 and/or integrated into the cleaning jets 106. Each of heating elements and/or cooling elements may be communicatively coupled to and controlled by the electronic controller 108. In some embodiments, each of the cleaning jets 106 are fluidly coupled to the fluid tank 120 via a respective heated feed line and a respective cooling feed line. The feed lines 119 may also include one or more pumps (for example, pump 121) to control the flow and/or pressure of the fluid within the respective feed lines 119. The system 104 may include additional pumps (not shown) to control flow to a particular cleaning jet 106.

The sensor cleaning system 104 may include additional components. For example, the sensor cleaning system 104 may include one or more additional sensors 122. The sensors 122 may include one or more temperature sensors configured to measure a temperature of the fluid within the fluid tank 120, along the feed lines 119, or both. The sensors 122 may also include one or more pressure sensors configured to measure pressure of the fluid along the feed lines 119. In some embodiments, one or more of the sensors 122 may be integrated into the each of the cleaning jets 106 and/or the tank 120. The sensors 122 may also include one or more image sensors. It should be noted that the autonomous driving system 108 and other vehicle systems 112 may receive and utilize information from the additional sensors 122.

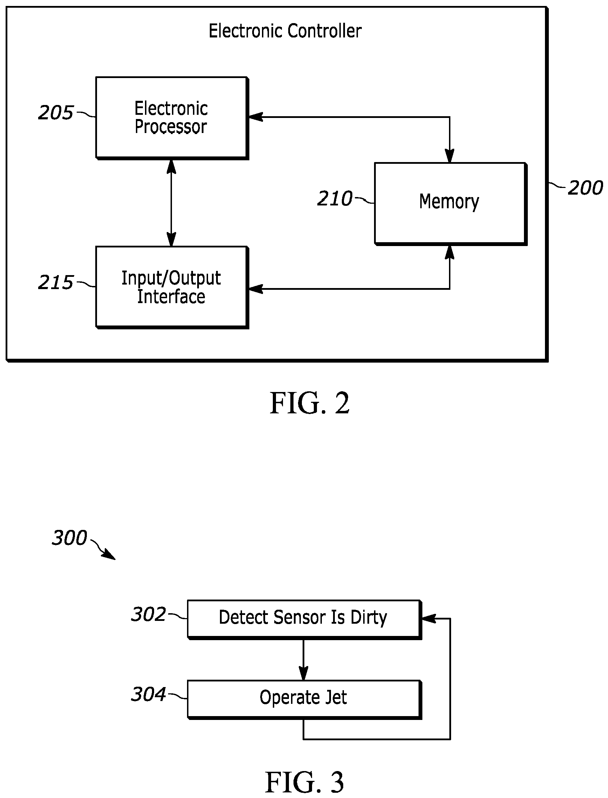

FIG. 2 illustrates an exemplary embodiment of the electronic controller 108, which includes an electronic processor 205 (for example, a microprocessor, application specific integrated circuit, etc.), a memory 210, and an input/output interface 215. The memory 210 may be made up of one or more non-transitory computer-readable media and includes at least a program storage area and a data storage area. The program storage area and the data storage area can include combinations of different types of memory, such as read-only memory ("ROM"), random access memory ("RAM") (for example, dynamic RAM ("DRAM'), synchronous DRAM ("SDRAM"), etc.), electrically erasable programmable read-only memory ("EEPROM'), flash memory, or other suitable memory devices. The electronic processor 205 is coupled to the memory 210 and the input/output interface 28. The electronic processor 205 sends and receives information (for example, from the memory 210 and/or the input/output interface 215), and processes the information by executing one or more software instructions or modules, capable of being stored in the memory 210, or another non-transitory computer readable medium. The software can include firmware, one or more applications, program data, filters, rules, one or more program modules, and other executable instructions. The electronic processor 205 is configured to retrieve from the memory 210 and execute, among other things, software for autonomous vehicle control, and for performing methods as described herein.

The input/output interface 215 transmits and receives information from devices external to the electronic controller 108 over one or more wired and/or wireless connections, for example, components of the system 104 via the bus 114. The input/output interface 215 receives user input, provides system output, or a combination of both. The input/output interface 215 may also include other input and output mechanisms (for example, a transceiver, which is not shown), which for brevity are not described herein and which may be implemented in hardware, software, or a combination of both. The input/output interface 215 may also include one or more transceivers for the controller 108 to transmit and receive information from other vehicles.

It should be understood that although FIG. 2 illustrates only a single electronic processor 205, memory 210, and input/output interface 215, alternative embodiments of the electronic controller 104 may include multiple processing units, memory modules, and/or input/output interfaces. It should also be noted that the system 100 may include other electronic controllers, each including similar components as, and configured similarly to, the electronic controller 200. In some embodiments, the electronic controller 200 is implemented partially or entirely on a semiconductor (for example, a field-programmable gate array ["FPGA"] semiconductor) chip. Similarly, the various modules and controllers described herein may be implemented as individual controllers, as illustrated, or as components of a single controller. In some embodiments, a combination of approaches may be used.

In some embodiments, the electronic controller 108 may include additional, fewer, or different components. For example, in some embodiments, the electronic controller 108 may include a transceiver or separate transmitting and receiving components, for example, a transmitter and a receiver. Some or all of the components of electronic controller 108 may be dispersed and/or integrated into other devices/components of the system 100 (for example, a vehicle control module or VCM, not shown, of the vehicle 102).

FIG. 3 illustrates an exemplary method 300 of cleaning one or more dirty sensors of a vehicle (for example, the sensors 110). As an example, the method 300 is explained in terms of the electronic controller 108, in particular the electronic processor 205 and a single sensor of the sensors 110. However, portions of the method 300 may be distributed among multiple devices (for example, one or more additional controllers/processors of or connected to the system 100) and applied to more than one sensor at the same or at different times. As noted, it should be understood that the term "dirty" is used herein to describe when a sensor is coated, covered or affected with water, snow, ice, mud, sand, dirt, debris, bugs, tree sap, grease, and other items that may cover, coat, or collect on the sensor.

At block 302, the electronic processor 205 detects that one or more of the sensors 110 is dirty. The electronic processor 205 may detect that the sensor is dirty one or more ways. For example, the electronic processor 205 may determine that the sensor is dirty based on a determination that a reading from the sensor is incorrect. In some embodiments, the electronic processor 205 utilizes one or more of the sensors 122 to detect that the sensor is dirty. For example, the electronic processor 205 may analyze an image from an image sensor proximate to the sensor and determine from the image that the sensor is dirty. The electronic processor 205 may determine that the sensor is dirty by analyzing an output from an IR sensor. The electronic processor 205 may also detect that the sensor is dirty via a notification received from another vehicle (not shown) proximate to the vehicle 102. For example, the other vehicle may detect, via an image sensor directed at the vehicle 102, that a sensor of the vehicle 102 is dirty and transmit, to the controller 108, a notification that the respective sensor is dirty. In some embodiments, the electronic processor 205 may also determine a soil type of the dirt or substance covering or coating the sensor (for example, via analysis of the information collected from the sensors 122). In some embodiments, the electronic processor 205 utilizes one or more artificial intelligence/machine learning algorithms to detect that one or more sensors 110 are dirty. The electronic processor 205 may generate a list of sensors of the sensors 110 that are dirty. The electronic processor 205 may further be configured to prioritize cleaning of particular sensors on the list.

At block 304, the electronic processor 205 operates one or more of the cleaning jets 106 such that fluid is ejected at the sensor at a predetermined pulse speed. In other words, the respective jet is operated such that a fast, alternating spray of fluid is emitted at the sensor that is dirty. A pulsated spray, as opposed to a steady spray, reduces usage of the fluid of the tank 120. The pulsated spray emitted by the jets 106 may be an on-off alternating spray or, in some embodiments, a spray that alternates between different intensities.

The predetermined pulse speed may be a preset pulse. In some embodiments, the predetermined pulse speed may be selected from a plurality of predetermined pulse speeds based on one or more factors. For example, the predetermined pulse speed may be selected based on the soil type that the sensor is dirty with. The predetermined pulse speed may also be selected based on a speed of the vehicle 102.

In some embodiments, the jet is operated for a predetermined time before the electronic processor 205 discontinues operation of the jet. The electronic processor 205 then returns to block 302. In some embodiments, the electronic processor 205 evaluates whether the sensor is sufficiently cleaned. The electronic processor 205 may determine that the sensor is clean via one or more methods similar to those performed at block 302. For example, the electronic processor 205 may evaluate a second image from an image sensor proximate to the sensor to determine that the sensor is sufficiently cleaned.

In some embodiments, the electronic processor 205 is further configured to adjust one or more additional characteristics of the fluid output by the respective cleaning jet based on the soil type. For example, the electronic processor 205 may be configured to adjust a temperature of the fluid (for example, via one or more of the heating/cooling elements of the system 104) and/or a pressure of the fluid output by the respective jet. The electronic processor 205 may adjust the pulse speed, temperature, and/or pressure of any individual cleaning jet based on additional factors. Additional factors may be sensor performance sensitivity to getting dirty, an average rate of how often the respective sensor gets dirty, a soil type, a shape of the vehicle 102, a speed of the vehicle 102, weather conditions, and the like. For example, in some embodiments, the electronic processor 205 is configured to adjust the pressure based on a speed of the vehicle 102. In another example, the electronic processor 205 may be configured to adjust the temperature of the fluid based on weather conditions. The location of the respective sensor may also be considered in the adjustment of one or more characteristics of the fluid.

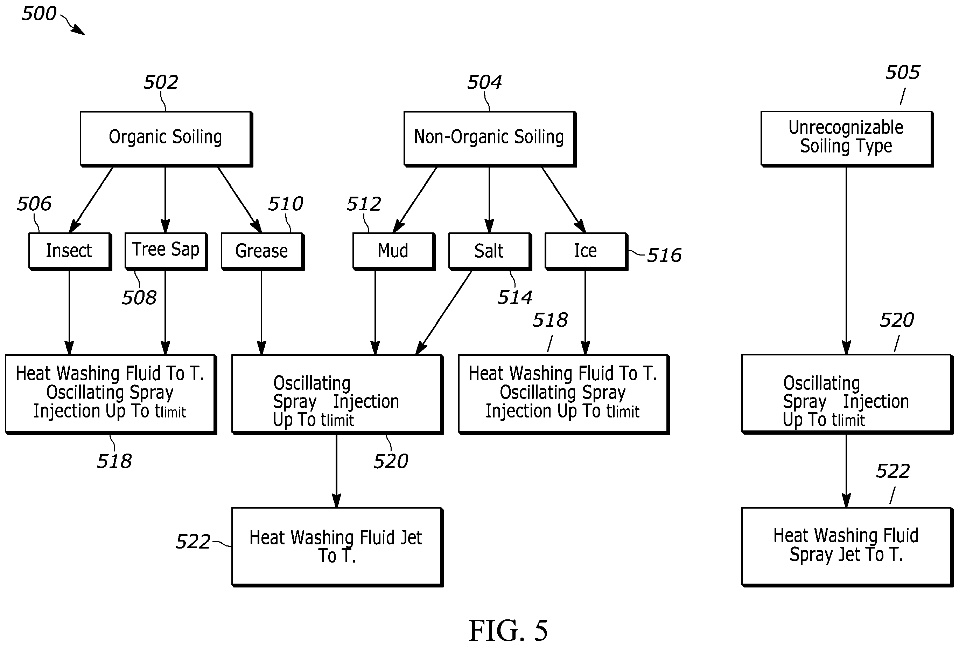

FIG. 5 is a flowchart 500 illustrating examples of cleaning methods implemented by the system 104 based on the soil type. The processor 205, in some embodiments, may first determine whether the soil type is organic 502 or non-organic 504. Following the determination, the processor 205 further determines the particular soil type. For example, for organic soiling 502, the processor 205 determines whether the soiling is of an insect 506, tree sap 508, or grease 510 while if the soil type is non-organic 504, the processor 205 determines whether it is mud 512, salt 514, or ice 516. Based on the determined soil type, the processor 205 operates the respective cleaning jet(s) 106 accordingly. For example, for insect 506, tree sap 508, and ice 516, the fluid is heated and sprayed at a pulse speed (blocks 518) while for grease 510 (or an unidentifiable soiling type 505), the sensor is first sprayed at a pulse speed (block 520) before the fluid is heated (block 522).

In the foregoing specification, specific embodiments have been described. However, one of ordinary skill in the art appreciates that various modifications and changes can be made without departing from the scope of the invention as set forth in the claims below. Accordingly, the specification and figures are to be regarded in an illustrative rather than a restrictive sense, and all such modifications are intended to be included within the scope of present teachings.

Moreover in this document, relational terms such as first and second, top and bottom, and the like may be used solely to distinguish one entity or action from another entity or action without necessarily requiring or implying any actual such relationship or order between such entities or actions. The terms "comprises," "comprising," "has," "having," "includes," "including," "contains," "containing" or any other variation thereof, are intended to cover a non-exclusive inclusion, such that a process, method, article, or apparatus that comprises, has, includes, contains a list of elements does not include only those elements but may include other elements not expressly listed or inherent to such process, method, article, or apparatus. An element proceeded by "comprises ... a," "has ... a," "includes ... a," or "contains ... a" does not, without more constraints, preclude the existence of additional identical elements in the process, method, article, or apparatus that comprises, has, includes, contains the element. The terms "a" and "an" are defined as one or more unless explicitly stated otherwise herein. The terms "substantially," "essentially," "approximately," "about" or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. The term "coupled" as used herein is defined as connected, although not necessarily directly and not necessarily mechanically. A device or structure that is "configured" in a certain way is configured in at least that way but may also be configured in ways that are not listed.

Thus, embodiments provide, among other things, a cleaning system for a sensor of a vehicle. Various embodiments are set forth in the following claims.

## Claims

1. A sensor cleaning system for cleaning a sensor of a vehicle, the system comprising:
a jet configured to eject a fluid at an alternating pulse at the sensor; and
an electronic processor configured to:
detect that the sensor is dirty; and
operate the jet such that the fluid is ejected at the sensor at a predetermined pulse speed.

2. The system of claim 1, wherein the electronic processor is further configured to select the predetermined pulse speed from a plurality of predetermined pulse speeds.

3. The system of claim 2, wherein the electronic processor is further configured to determine a soil type that the sensor is dirty with and select the predetermined pulse speed based on the determined soil type.

4. The system of claim 1, wherein the electronic processor is further configured to adjust a temperature of the fluid based on the determined soil type.

5. The system of claim 4, wherein the electronic processor is further configured to adjust the temperature of the fluid based on a weather condition.

6. The system of claim 1, wherein the electronic processor is further configured to operate the jet at a predetermined pressure.

7. The system of claim 6, wherein the electronic processor is further configured to select the predetermined pressure based on a speed of the vehicle.

8. A method for cleaning a sensor of a vehicle, the method comprising:
detecting that the sensor is dirty; and
operating a jet configured to eject a fluid at an alternating pulse at the sensor such that the fluid is ejected at the sensor at a predetermined pulse speed.

9. The method of claim 8, the method further comprising selecting the predetermined pulse speed from a plurality of predetermined pulse speeds.

10. The method of claim 9, the method further comprising determining a soil type that the sensor is dirty with and selecting the predetermined pulse speed based on the determined soil type.

11. The method of claim 8, the method further comprising adjusting a temperature of the fluid based on the determined soil type.

12. The method of claim 11, the method further comprising adjusting the temperature of the fluid based on a weather condition.

13. The method of claim 8, the method further comprising operating the jet at a predetermined pressure.

14. The method of claim 13, the method further comprising determining a speed of the vehicle and selecting the predetermined pressure based on a speed of the vehicle.
